# EUROPEAN PATENT APPLICATION

(11) **EP 3 373 130 A1**
(43) Date of publication of application: **12.09.2018**
(21) Application number: 16861309.9
(22) Date of filing: 06.07.2016
(51) Int. Cl.: G06F 3/14, G06F 3/0488

(54) **METHOD FOR RUNNING MULTIPLE SCREENS OF INTELLIGENT DEVICE, AND SYSTEM THEREOF**

(30) Priority: 03.11.2015 CN 201510735374
(71) Applicant: Huizhou TCL Mobile Communication Co., Ltd., Huizhou, Guangdong 516006 (CN)
(72) Inventor: CHENG, Yongzhong, HuiZhou Guangdong 516006 (CN); LAI, Mingquan, HuiZhou Guangdong 516006 (CN); ZHOU, Junfeng, HuiZhou Guangdong 516006 (CN); SHI, Cuiping, Guangdong 516006 (CN)
(74) Representative: Petraz, Gilberto Luigi
(86) International application number: PCT/CN2016/088820
(87) International publication number: WO 2017/076039

(57) **Abstract**

A method for operating multiple screens in a smart device and a system thereof are provided by the present disclosure. It displays multiple screens on a physical screen at the same time, and operates the multiple screens independently, through setting a specific method for operating virtual screens.

## Description

### BACKGROUND

### 1. Field of the disclosure

The present disclosure relates to the field of smart device display interaction technology, and more specifically to a method for operating multiple screens in a smart device and a system thereof.

### 2. Description

With continuous development of the smart devices, the capability of a smart device to operate multiple processes at the same time has been significantly increased. It has been very common to operate many applications at the same time in the smart device such as a cell phone or a tablet computer.

With the explosive growth of application quantities, when doing a series of actions, a user operates many applications at the same time to produce a satisfactory result. However, current screens of the smart devices usually support outputting from only one application interface, and do not have the ability to zoom in or zoom out the application interface, namely a virtual screen. When running different applications, the smart devices needs a user to switch between different application interfaces on a display, to control the different applications, which is not convenient for the user.

Current technology of workspaces in UBUNTU systems employs a similar function. It can divide the display into four virtual screens, but cannot support independent operation on the virtual screens. In some other multiple interfaces display systems, such as a CLOVER interface in LENOVO LEPHONE, ANDROID operating system with its own tab, etc., the multiple interfaces display method fails to run many applications on the display at the same time, and has great limitations.

Therefore, the prior art needs to be developed.

### SUMMARY OF THE DISCLOSURE

To overcome the above-mentioned disadvantages, an object of the present disclosure is to provide a method for operating multiple screens in a smart device and a system thereof, which solves smart device not convenient for a user to control many applications at the same time in the prior art.

The technical schemes of the present disclosure are illustrated hereunder.

A method for operating multiple screens in the smart device includes:
A: presetting a number and a layout of virtual screens operating on a physical screen of the smart device;
B: calculating and producing a pixel area that each virtual screen occupies on the physical screen according to the number and the layout of the virtual screens;
C: proportionately scaling a display interface of each application corresponding to the virtual screen according to a ratio of the pixel area to the physical screen;
D: combining display interfaces of applications, and writing into an image buffer of the smart device;
E: displaying a combined display interface of the applications on the physical screen, to operate multiple screens on the physical screen at a same time.

In the method for operating multiple screens in the smart device, the method further includes:
F: dividing a touch screen into several independent areas corresponding to the layout of the virtual screens to independently acquire touch operational commands for the applications displayed on different ones of the virtual screens, in response to the physical screen being the touch screen.

In the method for operating multiple screens in the smart device, the D includes:
D1: setting a first sub-image buffer and a second sub-image buffer in the image buffer of the smart device if the smart device using an ANDROID system;
D2: displaying data stored in the second sub-image buffer on the physical screen of the smart device, when the combined display interface of the applications is written into the first sub-image buffer; and displaying data stored in the first sub-image buffer on the physical screen of the smart device, when the combined display interface of the applications is written into the second sub-image buffer.

In the method for operating multiple screens in the smart device, the method further includes:
G: using resource of the smart device in turn according to a startup sequence of two or more applications, in response to the two or more applications acquiring user instructions and calling a same resource of the smart device at the same time.

In the method for operating multiple screens in the smart device, a transition region is provided between the virtual screens for receiving user instructions to adjust size of the virtual screens accordingly.

A method for operating multiple screens in the smart device includes:
A: presetting a number and a layout of virtual screens operating on a physical screen of the smart device;
B: calculating and producing a pixel area that each virtual screen occupies on the physical screen according to the number and the layout of the virtual screens;
C: proportionately scaling a display interface of each application corresponding to the virtual screen according to a ratio of the pixel area to the physical screen;
D: combining display interfaces of applications, and writing into an image buffer of the smart device;
E: displaying a combined display interface of the applications on the physical screen, to operate multiple screens on the physical screen at a same time;
F: dividing a touch screen into several independent areas corresponding to the layout of the virtual screens to independently acquire touch operational commands for the applications displayed on different ones of the virtual screens, in response to the physical screen being the touch screen;
wherein the D includes:
D1: setting a first sub-image buffer and a second sub-image buffer in the image buffer of the smart device if the smart device using an ANDROID system;
D2: displaying data stored in the second sub-image buffer on the physical screen of the smart device when the combined display interface of the applications is written into the first sub-image buffer; and displaying data stored in the first sub-image buffer on the physical screen of the smart device when the combined display interface of the applications is written into the second sub-image buffer.

A method for operating multiple screens in the smart device includes:
A: presetting a number and a layout of virtual screens operating on a physical screen of the smart device;
B: calculating and producing a pixel area that each virtual screen occupies on the physical screen according to the number and the layout of the virtual screens;
C: proportionately scaling a display interface of each application corresponding to the virtual screen according to a ratio of the pixel area to the physical screen;
D: combining display interfaces of applications, and writing into an image buffer of the smart device;
E: displaying a combined display interface of the applications on the physical screen, to operate multiple screens on the physical screen at a same time;
F: dividing a touch screen into several independent areas corresponding to the layout of the virtual screens to independently acquire touch operational commands for the applications displayed on different ones of the virtual screens, in response to the physical screen being the touch screen;
wherein the D includes:
D1: setting a first sub-image buffer and a second sub-image buffer in the image buffer of the smart device if the smart device using an ANDROID system;
D2: displaying data stored in the second sub-image buffer on the physical screen of the smart device when the combined display interface of the applications is written into the first sub-image buffer; and displaying data stored in the first sub-image buffer on the physical screen of the smart device when the combined display interface of the applications is written into the second sub-image buffer;
wherein a transition region is provided between the virtual screens for receiving user instructions to adjust size of the virtual screens accordingly.

A system for operating multiple screens in the smart device includes:
a setting module presetting a number and a layout of virtual screens operating on a physical screen of the smart device;
a pixel area calculating module calculating and producing a pixel area that each virtual screen occupies on the physical screen according to the number and the layout of the virtual screens;
a scaling module proportionately scaling a display interface of each application corresponding to the virtual screen according to a ratio of the pixel area to the physical screen;
a combining module combining display interfaces of applications, and writing into an image buffer of the smart device;
a physical screen displaying a combined display interface of the applications, to operate multiple screens on the physical screen at a same time.

The system for operating multiple screens in the smart device, further includes:
a controlling module dividing a touch screen into several independent areas corresponding to the layout of the virtual screens to independently acquire touch operational commands for the applications displayed on different ones of the virtual screens, in response to the physical screen being the touch screen.

In the system for operating multiple screens in the smart device, the combining module includes:
an image buffer setting unit setting a first sub-image buffer and a second sub-image buffer in the image buffer of the smart device if the smart device using an ANDROID system;
a buffer displaying unit displaying data stored in the second sub-image buffer on the physical screen of the smart device when the combined display interface of the applications is written into the first sub-image buffer; and displaying data stored in the first sub-image buffer on the physical screen of the smart device when the combined display interface of the applications is written into the second sub-image buffer.

The system for operating multiple screens in the smart device further includes:
a startup sequence module using resource of the smart device in turn according to a startup sequence of two or more applications, in response to the two or more applications acquiring user instructions and calling a same resource of the smart device at the same time.

In the system for operating multiple screens in the smart device, a transition region is provided between the virtual screens for receiving user instructions to adjust size of the virtual screens accordingly.

A system for operating multiple screens in the smart device includes:
a setting module presetting a number and a layout of virtual screens operating on a physical screen of the smart device;
a pixel area calculating module calculating and producing a pixel area that each virtual screen occupies on the physical screen according to the number and the layout of the virtual screens;
a scaling module proportionately scaling a display interface of each application corresponding to the virtual screen according to a ratio of the pixel area to the physical screen;
a combining module combining display interfaces of applications, and writing into an image buffer of the smart device;
a physical screen displaying a combined display interface of the applications, to operate multiple screens on the physical screen at a same time;
a controlling module dividing a touch screen into several independent areas corresponding to the layout of the virtual screens to independently acquire touch operational commands for the applications displayed on different ones of the virtual screens, in response to the physical screen being the touch screen;
wherein the combining module includes:
   a image buffer setting unit setting a first sub-image buffer and a second sub-image buffer in the image buffer of the smart device if the smart device using an ANDROID system;
   a buffer displaying unit displaying data stored in the second sub-image buffer on the physical screen of the smart device when the combined display interface of the applications is written into the first sub-image buffer; and displaying data stored in the first sub-image buffer on the physical screen of the smart device when the combined display interface of the applications is written into the second sub-image buffer.

A system for operating multiple screens in the smart device includes:
a setting module presetting a number and a layout of virtual screens operating on a physical screen of the smart device;
a pixel area calculating module calculating and producing a pixel area that each virtual screen occupies on the physical screen according to the number and the layout of the virtual screens;
a scaling module proportionately scaling a display interface of each application corresponding to the virtual screen according to a ratio of the pixel area to the physical screen;
a combining module combining display interfaces of applications, and writing into an image buffer of the smart device;
a physical screen displaying a combined display interface of the applications, to operate multiple screens on the physical screen at a same time;
a controlling module dividing a touch screen into several independent areas corresponding to the layout of the virtual screens to independently acquire touch operational commands for the applications displayed on different ones of the virtual screens, in response to the physical screen being the touch screen;
wherein the combining module includes:
   an image buffer setting unit setting a first sub-image buffer and a second sub-image buffer in the image buffer of the smart device if the smart device using an ANDROID system;
   a buffer displaying unit displaying data stored in the second sub-image buffer on the physical screen of the smart device when the combined display interface of the applications is written into the first sub-image buffer; and displaying data stored in the first sub-image buffer on the physical screen of the smart device when the combined display interface of the applications is written into the second sub-image buffer.

Beneficial effects of the the present disclosure are that the method for operating multiple screens in the smart device and the system thereof display multiple screens on the physical screen at the same time, and the multiple screens are independently performable, through setting a specific method for operating virtual screens. Therefore, number of applications can be controlled independently by users, which is convenient for the users to call the number of applications to finish a complex operation. The method and the system simplify operation procedure on the smart device, and have a good application prospect.

### BRIEF DESCRIPTION OF THE DRAWINGS

FIG. 1 is a flowchart showing a method for operating multiple screens in a smart device according to the present disclosure.
FIG. 2 is a flowchart showing step S400 of the method for operating multiple screens in the smart device according to the present disclosure.
FIG. 3 is a schematic diagram showing the method for operating multiple screens in the smart device with two sub-image buffers according to the present disclosure.
FIG. 4 is a structural diagram showing a system for operating multiple screens in the smart device according to the present disclosure.
FIG. 5 is a diagram showing an embodiment of the method for operating multiple screens in the smart device according to the present disclosure.

### DETAILED DESCRIPTION

The present disclosure provides a method for operating multiple screens in a smart device and a system thereof. In order to describe the purpose, the technical solution and the advantage of the present disclosure more clearly and definitely, the following drawing and description will further describe the present disclosure specifically. It should be understood that, the description of the embodiment here is only used for explaining the present disclosure, not limiting the present disclosure.

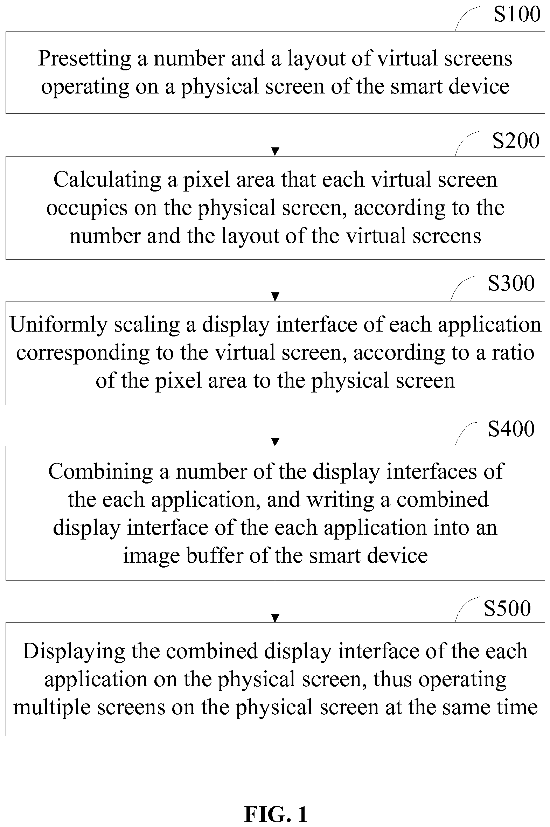

As shown in FIG. 1, it is an embodiment of a method for operating multiple screens in a smart device provided by the present disclosure. The method includes the following steps:

In step S100, presetting a number and a layout of virtual screens operating on a physical screen of the smart device. The term "virtual screen" means a display interface of a specific application, namely an interface interacting with a user. In general, the smart device may only display one display interface of the application.

Both the number and the layout may be personally set by the user, or by a manufacturer when leaving a factory.

In step S200, calculating a pixel area that each virtual screen occupies on the physical screen according to the number and the layout of the virtual screens.

In step S300, proportionately scaling a display interface of each application corresponding to the virtual screen according to a ratio of the pixel area to the physical screen. It should be clear, the application includes a third party application, a desktop launcher, a built-in application, etc.

In step S400, combining display interfaces of applications, and writing into an image buffer of the smart device.

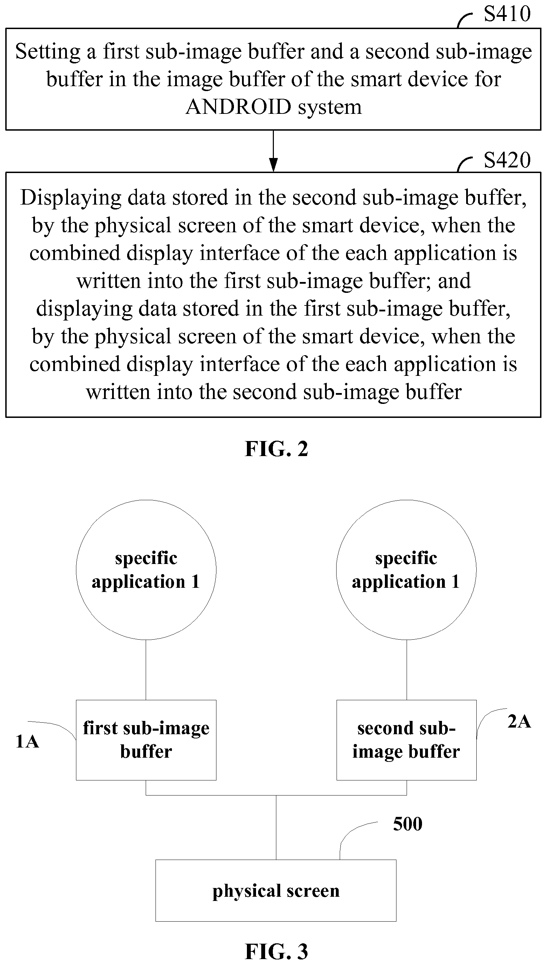

In ANDROID systems, when the application is written into a display buffer (namely the image buffer), if it is displayed on the physical screen at the same time, this will lead to problems like a splash screen, a blurry screen, flashing at some frequencies, and so on. Therefore, as a preferred embodiment shown in FIG. 2, the step S400 includes specifically:

In step S410, setting a first sub-image buffer and a second sub-image buffer in the image buffer of the smart device if the smart device using an ANDROID system.

In step S420, displaying data stored in the second sub-image buffer on the physical screen of the smart device when a combined display interface of the applications is written into the first sub-image buffer; and displaying data stored in the first sub-image buffer on the physical screen of the smart device when the combined display interface of the applications is written into the second sub-image buffer.

The setting of two sub-image buffers for the combined display interface of the applications, may effectively avoid physical screen display problems while writing into the buffer at the same time. In an embodiment shown as FIG. 3, for example, when a specific application 1 writes display data into a first sub-image buffer 1A, a physical screen 500 only displays images stored in a second sub-image buffer 2A, when the first sub-image buffer 1A finishes writing and the physical screen 500 displays, the specific application 1 writes the display data into the second sub-image buffer 2A again.

In step S500, displaying a combined display interface of the applications on the physical screen, to operate multiple screens on the physical screen at the same time.

In the embodiment of the present invention, when the physical screen of the smart device is a touch screen, the method further includes:

In step S600, dividing a touch screen into several independent areas corresponding to the layout of the virtual screens to independently acquire touch operational commands for the applications displayed on different ones of the virtual screens, in response to the physical screen being the touch screen.

Namely, an input unit (the touch screen) of the smart device is divided into several independent areas correspondingly, thus, the user operates different applications and acquires feedback of the applications on a same touch screen.

An embodiment of logical operation process is as following, (for example, there are three applications):

First, the number and the layout are set initial or by the user. Then, the touch screen drive calculates the pixel area on the virtual screen, and a scaling ratio.

The touch screen acquires the use's instruction (touch position information and so on), drives corresponding touch events and processes by the control system of the smart device, for example, a process calls resource conflicts.

The implementation method may operate number of the applications on the same physical screen. Therefore, a number of virtual screen applications may often occupy one same resource (the hardware resource of the smart device, for example, a microphone, etc.).

In order to resolve the conflict effectively, the method further includes: using a resource of the smart device in turn according to a startup sequence of two or more applications, in response to the two or more applications acquiring user instructions and calling the same resource of a smart device at the same time.

For example, when user opens a camera in two virtual screens, the screen first opened gets priority to use the camera, the screen second opened cannot use the camera until the first priority screen exits the application. If the user opens the camera in three virtual screens, the method executes according to the sequence of first, second, and third.

The following will take screen resolution 1280x720 and two virtual screens as an example, to demonstrate the embodiment of the method for operating multiple screens.

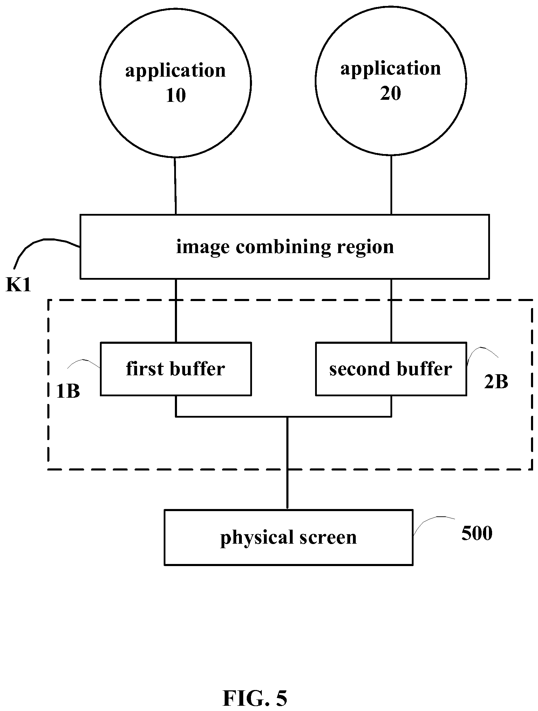

As shown in FIG. 5, in an arithmetic module "image combining region" K1 traditionally adds in the smart device according to the ratio of 1/2, the application 10 and the application 20 are compressed into screen resolution 640x720, and the two applications are combined to form an image in the screen resolution 1280x720 corresponding to the physical screen.

The combined image writes into a first buffer 1B first, then the physical screen reads the data in a second buffer 2B. After the first buffer 1B finishes writing and the physical screen displays, the combined image writes display data into the second buffer 2B, thus avoid blurry screens which leads to writing and reading at the same time.

As a preferred embodiment, a transition region is provided between the virtual screens for receiving user instructions to adjust size of the virtual screens accordingly. The transition region is a boundary between the two virtual screens. The user may change size and layout of the virtual screens by moving or pulling the boundary, which is very easy to use.

In conclusion, the embodiment of the method for operating multiple screens disclosed in the present invention, may meet the following requirements in general:

First, the whole physical display area may display multiple screens at the same time, include but not limited in 2, 3, 4 or more. The number and the layout of virtual screens may be set by the user.

In the application operation, any running application doesnot affect applications on the other virtual screen. One application may be run in different virtual screens.

When faced with the issues that the number of virtual screen applications occupies a same resource, the startup sequence of applications is used to determine priority.

On the physical screen (touch screen), pulling the boundary between the virtual screens may adjust the size of the virtual screen. No matter how many the virtual screen may be divided on the whole display interface, the virtual screens should occupy the whole display interface.

It should be notice, in order to ensure the usage, any virtual screen may not be overlap. When any virtual screen program is in full screen, the virtual screen program is covered with its located virtual screen. And the interface of the virtual screen program may only display on its located virtual screen, may not display part on one virtual screen and display other parts on another virtual screen.

The interface displayed on any virtual screen program, may not cover the boundary of the virtual screens.

The multiple screens operates in one operation system, any virtual screen has and only has one operation system interface. And any operation system interface displayed on the screen is the same as the whole display interface displayed only one virtual screen.

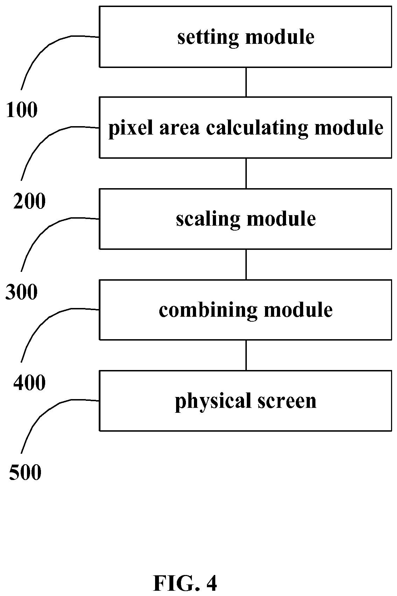

As shown in FIG. 4, a system for operating multiple screens in a smart device is provided by the present disclosure. The system includes:

A setting module 100 is configure for presetting a number and a layout of virtual screens operating on a physical screen of the smart device.

A pixel area calculating module 200 is configured for calculating a pixel area that each virtual screen occupies on the physical screen according to the number and the layout of the virtual screens.

A scaling module 300 is configured for proportionately scaling a display interface of each application corresponding to the virtual screen according to a ratio of the pixel area to the physical screen.

A combining module 400 is configured for combining display interfaces of applications, and writing into an image buffer of the smart device.

A physical screen 500 is configured for displaying a combined display interface of the applications, to operate multiple screens on the physical screen at the same time.

In particular, responsive to the physical screen is a touch screen, the system further includes a controlling module for dividing a touch screen into several independent areas corresponding to the layout of the virtual screens to independently acquire touch operational commands for the applications displayed on different ones of the virtual screens, in response to the physical screen being the touch screen.

As a preferred embodiment, when the smart device operates ANDROID system, the combining module includes:

An image buffer setting unit is configured to set a first sub-image buffer and a second sub-image buffer in the image buffer of the smart device.

An buffer displaying unit displays data stored in the second sub-image buffer on the physical screen of the smart device when the combined display interface of the applications is written into the first sub-image buffer; and displays data stored in the first sub-image buffer on the physical screen of the smart device when the combined display interface of the applications is written into the second sub-image buffer.

More specific, the system further includes:

A startup sequence module using resource of the smart device in turn according to a startup sequence of two or more applications, in response to the two or more applications acquiring user instructions and calling a same resource of the smart device at the same time.

In particular, a transition region is provided between the virtual screens for receiving user instructions to adjust size of the virtual screens accordingly. Details are as mentioned above.

It should be understood, a person having ordinary skill in the art, may replace or change the technical solution and conception according to the present disclosure, and all the change and disclosure should belong the the protection range of the claimed present disclosure.

## Claims

1. A method for operating multiple screens in a smart device, comprising:
A: presetting a number and a layout of virtual screens operating on a physical screen of the smart device;
B: calculating a pixel area that each virtual screen occupies on the physical screen according to the number and the layout of the virtual screens;
C: proportionately scaling a display interface of each application corresponding to the virtual screen according to a ratio of the pixel area to the physical screen;
D: combining display interfaces of applications, and writing into an image buffer of the smart device; and
E: displaying a combined display interface of the applications on the physical screen, to operate multiple screens on the physical screen at a same time.

2. The method for operating multiple screens in the smart device as claimed in claim 1, further comprising:
F: dividing a touch screen into several independent areas corresponding to the layout of the virtual screens to independently acquire touch operational commands for the applications displayed on different ones of the virtual screens, in response to the physical screen being the touch screen.

3. The method for operating multiple screens in the smart device as claimed in claim 1, wherein the D comprises:
D1: setting a first sub-image buffer and a second sub-image buffer in the image buffer if the smart device using an ANDROID system; and
D2: displaying data stored in the second sub-image buffer on the physical screen of the smart device when the combined display interface of the applications is written into the first sub-image buffer; displaying data stored in the first sub-image buffer on the physical screen of the smart device when the combined display interface of the applications is written into the second sub-image buffer.

4. The method for operating multiple screens in the smart device as claimed in claim 1, further comprising:
G: using resource of the smart device in turn according to a startup sequence of two or more applications, in response to the two or more applications acquiring user instructions and calling a same resource of the smart device at the same time.

5. The method for operating multiple screens in the smart device as claimed in claim 1, wherein a transition region is provided between the virtual screens for receiving user instructions to adjust size of the virtual screens accordingly.

6. A method for operating multiple screens in a smart device, comprising:
A: presetting a number and a layout of virtual screens operating on a physical screen of the smart device;
B: calculating a pixel area that each virtual screen occupies on the physical screen according to the number and the layout of the virtual screens;
C: proportionately scaling a display interface of each application corresponding to the virtual screen according to a ratio of the pixel area to the physical screen;
D: combining display interfaces of applications, and writing into an image buffer of the smart device;
E: displaying a combined display interface of the applications on the physical screen, to operate multiple screens on the physical screen at a same time; and
F: dividing a touch screen into several independent areas corresponding to the layout of the virtual screens to independently acquire touch operational commands for the applications displayed on different ones of the virtual screens, in response to the physical screen being the touch screen;
wherein the D comprises:
D1: setting a first sub-image buffer and a second sub-image buffer in the image buffer of the smart device if the smart device using an ANDROID system; and
D2: displaying data stored in the second sub-image buffer on the physical screen of the smart device when the combined display interface of the applications is written into the first sub-image buffer; and displaying data stored in the first sub-image buffer on the physical screen of the smart device when the combined display interface of the applications is written into the second sub-image buffer.

7. A method for operating multiple screens in a smart device, comprising:
A: presetting a number and a layout of virtual screens operating on a physical screen of the smart device;
B: calculating a pixel area that each virtual screen occupies on the physical screen according to the number and the layout of the virtual screens;
C: proportionately scaling a display interface of each application corresponding to the virtual screen according to a ratio of the pixel area to the physical screen;
D: combining display interfaces of applications, and writing into an image buffer of the smart device;
E: displaying a combined display interface of the applications on the physical screen, to operate multiple screens on the physical screen at a same time; and
F: dividing a touch screen into several independent areas corresponding to the layout of the virtual screens to independently acquire touch operational commands for the applications displayed on different ones of the virtual screens, in response to the physical screen being the touch screen;
wherein the D comprises:
D1: setting a first sub-image buffer and a second sub-image buffer in the image buffer of the smart device if the smart device using an ANDROID system; and
D2: displaying data stored in the second sub-image buffer on the physical screen of the smart device when the combined display interface of the applications is written into the first sub-image buffer; and displaying data stored in the first sub-image buffer on the physical screen of the smart device when the combined display interface of the applications is written into the second sub-image buffer;
wherein a transition region is provided between the virtual screens for receiving user instructions to adjust size of the virtual screens accordingly.

8. A system for operating multiple screens in a smart device, comprising:
a setting module presetting a number and a layout of virtual screens operating on a physical screen of the smart device;
a pixel area calculating module calculating a pixel area that each virtual screen occupies on the physical screen according to the number and the layout of the virtual screens;
a scaling module proportionately scaling a display interface of each application corresponding to the virtual screen according to a ratio of the pixel area to the physical screen;
a combining module combining display interfaces of applications, and writing into an image buffer of the smart device; and
a physical screen displaying a combined display interface of the applications, to operate multiple screens on the physical screen at a same time.

9. The system for operating multiple screens in the smart device as claimed in claim 8, wherein further comprises:
a controlling module dividing a touch screen into several independent areas corresponding to the layout of the virtual screens to independently acquire touch operational commands for the applications displayed on different ones of the virtual screens, in response to the physical screen being the touch screen.

10. The system for operating multiple screens in the smart device as claimed in claim 8, wherein the combining module comprises:
an image buffer setting unit setting a first sub-image buffer and a second sub-image buffer in the image buffer of the smart device if the smart device using an ANDROID system; and
a buffer displaying unit displaying data stored in the second sub-image buffer on the physical screen of the smart device when the combined display interface of the applications is written into the first sub-image buffer; and displaying data stored in the first sub-image buffer on the physical screen of the smart device when the combined display interface of the applications is written into the second sub-image buffer.

11. The system for operating multiple screens in the smart device as claimed in claim 8, wherein the system further comprises:
a startup sequence module using resource of the smart device in turn according to a startup sequence of two or more applications, in response to the two or more applications acquiring user instructions and calling the same resource of the smart device at the same time.

12. The system for operating multiple screens in the smart device as claimed in claim 8, wherein a transition region is provided between the virtual screens for receiving user instructions to adjust size of the virtual screens accordingly.

13. A system for operating multiple screens in a smart device, comprising:
a setting module presetting a number and a layout of virtual screens operating on a physical screen of the smart device;
a pixel area calculating module calculating a pixel area that each virtual screen occupies on the physical screen according to the number and the layout of the virtual screens;
a scaling module proportionately scaling a display interface of each application corresponding to the virtual screen according to a ratio of the pixel area to the physical screen;
a combining module combining display interfaces of applications, and writing into an image buffer of the smart device;
a physical screen displaying a combined display interface of the applications, to operate multiple screens on the physical screen at a same time; and
a controlling module dividing a touch screen into several independent areas corresponding to the layout of the virtual screens to independently acquire touch operational commands for the applications displayed on different ones of the virtual screens, in response to the physical screen being the touch screen;
wherein the combining module comprises:
an image buffer setting unit setting a first sub-image buffer and a second sub-image buffer in the image buffer of the smart device if the smart device using an ANDROID system; and
a buffer displaying unit displaying data stored in the second sub-image buffer on the physical screen of the smart device when the combined display interface of the applications is written into the first sub-image buffer; and displaying data stored in the first sub-image buffer on the physical screen of the smart device when the combined display interface of the applications is written into the second sub-image buffer.

14. A system for operating multiple screens in a smart device, comprising:
a setting module presetting a number and a layout of virtual screens operating on a physical screen of the smart device;
a pixel area calculating module calculating a pixel area that each virtual screen occupies on the physical screen according to the number and the layout of the virtual screens;
a scaling module proportionately scaling a display interface of each application corresponding to the virtual screen according to a ratio of the pixel area to the physical screen;
a combining module combining display interfaces of applications, and writing into an image buffer of the smart device;
a physical screen displaying a combined display interface of the applications, to operate multiple screens on the physical screen at a same time; and
a controlling module dividing a touch screen into several independent areas corresponding to the layout of the virtual screens to independently acquire touch operational commands for the applications displayed on different ones of the virtual screens, in response to the physical screen being the touch screen;
wherein the combining module comprises:
an image buffer setting unit setting a first sub-image buffer and a second sub-image buffer in the image buffer of the smart device if the smart device using an ANDROID system;
a buffer displaying unit displaying data stored in the second sub-image buffer on the physical screen of the smart device when the combined display interface of the applications is written into the first sub-image buffer; and displaying data stored in the first sub-image buffer on the physical screen of the smart device when the combined display interface of the applications is written into the second sub-image buffer; and
a startup sequence module using resource of the smart device in turn according to a startup sequence of two or more applications, in response to the two or more applications acquiring user instructions and calling a same resource of the smart device at the same time.
